(19) Europäisches Patentamt
European Patent Office
Office européen des brevets

(11) EP 0 771 847 B2

(12) # NEUE EUROPÄISCHE PATENTSCHRIFT

(45) Veröffentlichungstag und Bekanntmachung des Hinweises auf die Entscheidung über den Einspruch:
**28.12.2005 Patentblatt 2005/52**

(45) Hinweis auf die Patenterteilung:
**27.02.2002 Patentblatt 2002/09**

(21) Anmeldenummer: **96117119.6**

(22) Anmeldetag: **25.10.1996**

(51) Int Cl.[7]: **C08L 57/00**, C09D 157/04

(54) **Wässrige Polymerdispersionen**

Aqueous polymer dispersions

Dispersions aqueuses de polymère

(84) Benannte Vertragsstaaten:
**AT BE CH DE ES FR GB IT LI NL SE**

(30) Priorität: **02.11.1995 DE 19540725**

(43) Veröffentlichungstag der Anmeldung:
**07.05.1997 Patentblatt 1997/19**

(73) Patentinhaber: **BASF Aktiengesellschaft**
**67056 Ludwigshafen (DE)**

(72) Erfinder:
- **Ley, Gregor, Dr.**
**67319 Wattenheim (DE)**
- **Dersch, Rolf, Dr.**
**67434 Neustadt (DE)**
- **Schweigger, Enrique, Dr.**
**67063 Ludwigshafen (DE)**

(56) Entgegenhaltungen:

| | |
|---|---|
| EP-A- 0 358 979 | EP-A- 0 395 439 |
| EP-A- 0 455 028 | EP-A- 0 557 844 |
| EP-A- 0 628 613 | WO-A-94/05713 |
| DE-A- 2 918 067 | DE-A- 3 202 093 |
| DE-A- 3 410 235 | DE-A- 3 929 226 |
| FR-A- 2 235 958 | GB-A- 1 467 879 |
| GB-A- 2 025 985 | JP-A- 6 116 528 |
| US-A- 3 245 932 | US-A- 4 521 489 |

- **DATABASE WPI Section Ch, Week 8532 Derwent Publications Ltd., London, GB; Class A18, AN 85-194715 XP002112436 & JP 60 123564 A (KANSAI PAINT CO LTD), 2. Juli 1985 (1985-07-02)**
- **DATABASE WPI Section PQ, Week 9031 Derwent Publications Ltd., London, GB; Class P84, AN 90-235536 XP002112437 & JP 02 163676 A (RICOH KK), 22. Juni 1990 (1990-06-22)**
- **DUVE ET AL: "WENN EINE FARBE TROCKNET UND DER LACK ABBLÄTTERT" FARBE + LACK., Bd. 103, Nr. 9, September 1997 (1997-09), Seiten 50-57, XP000619872 CURT R.VINCENTZ VERLAG. HANNOVER., DE ISSN: 0014-7699**
- **"Inform", Bayer AG, Leverkusen, Ausgabe 9/92**
- **Dörr et al."Kronos Titandioxid in Dispersionsfarben", Kronos-Titan GmbH, 1989**

EP 0 771 847 B2

## Beschreibung

Die Erfindung betrifft die Verwendung einer wässrigen Polymerdispersion, enthaltend ein radikalisch polymerisiertes Polymer, welches eine minimale Filmbildetemperatur von 15 bis 50°C nai und aus

| | |
|---|---|
| 11 bis 35 Gew. -% | einer copolymerisierbaren ethylenisch ungesättigten Verbindung (Monomer) mit mindestens einer Hydroxylgruppe, |
| 89 bis 50 Gew.-% | sogenannter Hauptmonomere, ausgewählt aus $C_1$ -$C_{20}$ -Alkyl(meth)acrylaten, vinylaromatischen Verbindungen mit bis zu 20 C-Atomen, Vinylestern von bis zu 20 C-Atome enthaltenden Carbonsäuren, |
| 0 bis 30 Gew.-% | weiteren Monomeren |

aufgebaut ist, dadurch gekennzeichnet, dass die Polymer-dispersion als alleiniges Bindemittel ohne Mitverwendung weiterer Harze, ohne Zusatz von Vernetzern oder vernetzenden Harzen verwendet wird, für Anstrichmittell.

Des weiteren betrifft die Erfindung die Verwendung der wässrigen Polymerdispersionen als Anstrichmittel, insbesondere für Fußböden aus Asphalt, Beton oder Estrich.

Fußböden in Kellerräumen, Parkhäusern bzw. Garagen werden zur Verschönerung, zum Binden von Staub und zur Erleichterung der Reinigung mit einem Anstrichmittel beschichtet.

Bei hochbeanspruchten Fußböden, z.B. in Parkhäusern, werden besondere Anforderungen an die Abriebbeständigkeit und Chemikalienbeständigkeit der Fußbodenbeschichtung gestellt. Um diese Anforderungen zu erfüllen, werden vielfältig Epoxid- oder Polyurethanharze als Anstrichmittel verwendet.

Gegenüber den genannten Anstrichmitteln sind wässrige Polymerdispersionen grundsätzlich vorteilhaft aufgrund ihrer einfachen Handhabung, ihrer toxikologischen Unbedenklichkeit und der weitgehenden Vermeidung von Lösungsmitteln.

Nachteilig ist jedoch z.B. die vergleichbar geringe Chemikalienbeständigkeit von Beschichtungen auf Basis der Polymerdispersionen. Aus diesem Grunde war es bisher nicht möglich, Polymer-dispersionen als Beschichtungsmittel für hochbeanspruchte Fußböden in Garagen oder Parkhäusern zu verwenden.

Aufgabe der vorliegenden Erfindung waren daher die verwendung wässrige polymerdispersionen, welche sich als Beschichtungsmittel für Fußböden auch in hochbeanspruchten Räumlichkeiten, z.B. in Garagen oder Parkhäusern, eignen.

Gefunden wurden die Verwendung der eingangs definierten Polymerdispersionen als allerniges Bindemittel ohne Mitverwendung weiterer Harze, ohne Zusatz von Vernetzern oder vernetzenden Harzen als Bindemittel für Anstrichmittel für Fußböden, z.B. aus Asphalt, Beton oder Estrich, insbesondere in hochbeanspruchten Räumlichkeiten, z.B. Garagen und Parkhäusern.

Die erfindungsgemäße verwendete Polymerdispersion enthält ein radikalisch polymerisiertes Polymer (kurz 'Polymer'), welches aufgebaut ist aus

11 bis 35 Gew.-%, vorzugsweise 15 bis 30 Gew.-% und besonders bevorzugt 17 bis 25 Gew.-% mindestens eines Monomeren mit mindestens einer, bevorzugt einer Hydroxylgruppe,

89 bis 50 Gew.-%, vorzugsweise 85 bis 60 Gew.-% und besonders bevorzugt 83 bis 70 Gew.-% mindestens eines Hauptmonomeren und

0 bis 30 Gew.-%, vorzugsweise 0 bis 20 Gew.-% und besonders bevorzugt 0 bis 10 Gew.-% weiterer Monomere. Die erfindungsgemäß verwendete Polymer-dispersion wird als alleiniges Bindemittel ohne Mitverwendung weiterer Harze, ohne zusatz von Vernetzern oder vernetzenden Harzen verwendet.

Die Gewichtsangaben sind jeweils auf das Polymer bezogen.

Als Monomere mit Hydroxygruppen sind insbesondere $C_2$-$C_{10}$-Hydroxyalkyl(meth)acrylate bevorzugt. Besonders bevorzugt sind $C_2$-$C_4$-Hydroxyalkyl(meth)acrylate wie Hydroxyethyl(meth)acrylat.

Geeignete Hauptmonomere sind insbesondere $C_1$-$C_{10}$, besonders bevorzugt $C_1$-$C_8$ -Alkyl(meth)acrylate.

Zu nennen sind z.B. Alkyl(meth)acrylate mit einem $C_1$-$C_{10}$-Alkylrest, wie Methylmethacrylat, Methylacrylat, n-Butylacrylat, Ethylacrylat und 2-Ethylhexylacrylat.

Insbesondere sind auch Mischungen der Alkyl(meth)acrylate geeignet:

Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol, $\alpha$- und p-Methylstyrol, $\alpha$-Butylstyrol, 4-n-Butylstyrol, 4-n-Decylstyrol und vorzugsweise Styrol in Betracht.

Besonders bevorzugte Hauptmonomere sind die genannten Alkyl(meth)acrylate, die vorzugsweise allein oder in Mischungen mit vinylaromatischen Verbindungen oder Vinylestern als Hauptmonomere eingesetzt werden. In den

Mischungen liegt der Anteil der vinylaromatischen Verbindungen und Vinylester vorzugsweise jeweils unter 20 Gew.-%, insbesondere jeweils unter 10 Gew.-%, besonders bevorzugt unter 5 Gew.-%, bezogen auf das Polymere.

Weitere Monomere können z.B. Vinylether, wie Vinylether von 1 bis 4C-Atome enthaltenden Alkoholen, Vinylhalogenide, z.B. Vinylchlorid oder Vinylidenchlorid, aliphatische Kohlenwasserstoffe mit ein oder zwei Doppelbindungen, z.B. Ethylen, Isopren, Butadien, sein.

Als weitere Monomere kommen insbesondere auch Monomere mit einer oder mehreren Säure-, Säureanhydrid- oder Amidgruppen, z.B. $C_3$-$C_5$ olefinisch ungesättigte Mono- oder Dicarbonsäuren, wie (Meth)acrylsäure, Itacon-, Fumar-, Malein- oder Crotonsäure, oder Sulfonsäuren bzw. deren Salze, z.B. Acrylamidopropansulfonsäure oder Vinylsulfonsäure oder (Meth)acrylamid als Amide in Betracht.

Weitere Monomere können auch vernetzende Monomere mit zwei copolymerisierbaren olefinisch ungesättigten Gruppen, wie Hexan- oder Butandioldiacrylat, (Meth)allyl(meth)acrylat oder Divinylbenzol sein. Andere vernetzende Monomere enthalten funktionelle Gruppen, z.B. Epoxygruppen, welche durch Kondensations- oder Additionsreaktionen vernetzen. Genannt sei hier insbesondere Glycidyl(meth)acrylat.

Weitere Monomere, wie Methacryloxiethylethylenharnstoff, Acetoacetoxyethylmethacrylat oder Diacetonacrylamid, können die Naßhaftung erhöhen.

Das Polymer enthält vorzugsweise kein (Meth)acrylnitril.

Das Polymer hat eine Mindestfilmbildetemperatur (MFT) von 15 bis 50°C, vorzugsweise von 20 bis 40°C. Die Mindestfilmbildetemperatur wird bestimmt gemäß DIN 53787.

Das Polymer bzw, die wässrige Polymerdispersion wird vorzugsweise hergestellt durch Emulsionspolymerisation.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall anhand weniger Vorversuche überprüft werden kann. Vorzugsweise werden anionische und nichtionische Emulgatoren als grenzflächenaktive Substanzen verwendet. Gebräuchliche Emulgatoren sind z.B. ethoxylierte Fettalkohole (EO-Grad: 3 bis 50, Alkylrest: $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestem der Sulfobernsteinsäure sowie Alkali- und Ammoniumsalze von Alkylsulfaten (Alkylrest: $C_8$ bis $C_{12}$), von ethoxylierten Alkanolen (EP-Grad: 4 bis 30, Alkylrest: $C_{12}$ bis $C_{18}$), von sulfatierten Alkylphenolethoxylaten (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$).

Weitere geeignete Emulgatoren sind Verbindungen der allgemeinen Formel I

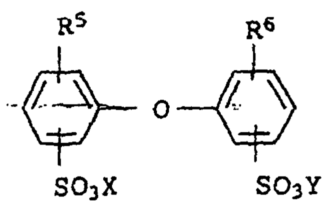

(I)

worin $R^5$ und $R^6$ Wasserstoff oder $C_4$- bis $C_{14}$-Alkyl bedeuten und nicht gleichzeitig Wasserstoff sind, und C und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II, in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg-Thieme-Verlag, Stuttgart, 1961, Seiten 192 bis 208).

Handelsnamen von Emulgatoren sind z.B. Dowfax® 2A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065 etc.

Die grenzflächenaktive Substanz wird üblicherweise in Mengen von 0,1 bis 10 Gew.-%, bezogen auf die zu polymerisierenden Monomeren, verwendet.

Wasserlösliche Initiatoren für die Emulsionspolymerisation sind z.B. Ammonium- und Alkalimetallsalze der Peroxodischwefelsäure, z.B. Natriumperoxodisulfat, Wasserstoffperoxid oder organische Peroxide, z.B. tert-Butylhydroperoxid.

Geeignet sind insbesondere sogenannte Reduktions-, Oxidations(Red-Ox)-Initiator-Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z.B. um die bereits vorstehend genannten Initiatoren für die Emulsionspolymerisation.

Bei den Reduktionskomponenten handelt es sich z.B. um Alkalimetallsalze der schwefligen Säure, wie z.B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit, oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Re-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z.B. die Reduktionskomponente, können auch Mischungen sein, z.B. eine Mischung aus dem Natriumsalz der Hydroxymethansulfinsäure und Natriumdisulfit.

Die genannten Verbindungen werden meist in Form von wässrigen Lösungen eingesetzt, wobei die untere Konzentration durch die in der Dispersion vertretbare Wassermenge und die obere Konzentration durch die Löslichkeit der betreffenden Verbindung in Wasser bestimmt ist.

Die Menge der Initiatoren beträgt im allgemeinen 0,1 bis 10 Gew.-%, bevorzugt 0,2 bis 2 Gew.-%, bezogen auf die zu polymerisierenden Monomeren. Es können auch mehrere verschiedene Initiatoren bei der Emulsionspolymerisation Verwendung finden.

Die Emulsionspolymerisation erfolgt in der Regel bei 30°C bis 95°C, vorzugsweise 50°C bis 90°C. Das Polymerisationsmedium kann sowohl nur aus Wasser als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d.h. nach einem Umsatz der Monomeren von mindestens 96 %, Initiator zugesetzt.

Die einzelnen Komponenten können dem Reaktor beim Zulaufverfahren von oben, in der Seite oder von unten durch den Reaktorboden zugegeben werden.

Die wässrigen Polymerdispersionen des Polymeren werden in der Regel mit Feststoffgehalten von 15 bis 75 Gew.-%, bevorzugt von 40 bis 60 Gew.-%, hergestellt.

Die wässrigen Polymerdispersionen werden als alleinige Bindemittel, d.h. ohne Mitverwendung weiterer Harze, und ohne Zusatz von Vernetzern oder vernetzenden Harzen, z.B. Harnstoffharzen, Melaminharzen, Phenolharzen, Epoxyharzen oder Polyisocyanaten bzw. Diisocyanaten, verwendet.

Die wässrigen Polymerdispersionen können einziger Bestandteil des Anstrichmittels sein. In der Regel enthalten die Anstrichmittel neben den wässrigen Polymerdispersionen noch weitere Zusatzstoffe, insbesondere Pigmente oder Füllstoffe, Dispergierhilfsmittel für die Pigmente oder Füllstoffe, Konservierungsmittel, Entschäumungsmittel und Verdicker.

Insbesondere eignen sich die erfindungsgemäßen Polymerdispersionen bzw. Anstrichmittel für bituminöse oder mineralische Oberflächen, z.B. Asphalt, Beton oder Estrich.

Aufgrund der Ölresistenz, Chemikalienbeständigkeit und der Abriebfestigkeit der erhaltenen Beschichtungen %, insbesondere jeweils unter 10 Gew.-%, besonders bevorzugt unter 5 Gew.-%, bezogen auf das Polymere.

Weitere Monomere können z.B. Vinylether, wie Vinylether von 1 bis 4 C-Atome enthaltenden Alkoholen, Vinylhalogenide, z.B. Vinylchlorid oder Vinylidenchlorid, aliphatische Kohlenwasserstoffe mit ein oder zwei Doppelbindungen, z.B. Ethylen, Isopren, Butadien, sein.

Als weitere Monomere kommen insbesondere auch Monomere mit einer oder mehreren Säure-, Säureanhydrid- oderAmidgruppen, z.B. $C_3$-$C_5$ olefinisch ungesättigte Mono- oder Dicarbonsäuren, wie (Meth)acrylsäure, Itacon-, Fumar-, Malein- oder Crotonsäure, oder Sulfonsäuren bzw. deren Salze, z.B. Acrylamidopropansulfonsäure oder Vinylsulfonsäure oder (Meth)acrylamid als Amide in Betracht.

Weitere Monomere können auch vernetzende Monomere mit zwei copolymerisierbaren olefinisch ungesättigten Gruppen, wie Hexan- oder Butandioldiacrylat, (Meth)allyl(meth)acrylat oder Divinylbenzol sein. Andere vernetzende Monomere enthalten funktionelle Gruppen, z.B. Epoxygruppen, welche durch Kondensations- oder Additionsreaktionen vernetzen. Genannt sei hier insbesondere Glycidyl(meth)acrylat.

Weitere Monomere, wie Methacryloxiethylethylenharnstoff, Acetoacetoxyethylmethacrylat oder Diacetonacrylamid, können die Naßhaftung erhöhen.

Das Polymer enthält vorzugsweise kein (Meth)acrylnitril.

Das Polymer hat eine Mindestfilmbildetemperatur (MFT) von 15 bis 50°C, vorzugsweise von 20 bis 40°C. Die Mindestfilmbildetemperatur wird bestimmt gemäß DIN 53787.

Das Polymer bzw, die wässrige Polymerdispersion wird vorzugsweise hergestellt durch Emulsionspolymerisation.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall anhand weniger Vorversuche überprüft werden kann. Vorzugsweise werden anionische und nichtionische Emulgatoren als grenzflächenaktive Substanzen verwendet. Gebräuchliche Emulgatoren sind z.B. ethoxylierte Fettalkohole (EO-Grad: 3 bis 50, Alkylrest: $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EP-Grad: 4 bis 30, Alkylrest: $C_{12}$ bis $C_{18}$), von sulfatierten Alkylphenolethoxylaten (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$).

Weitere geeignete Emulgatoren sind Verbindungen der allgemeinen Formel I

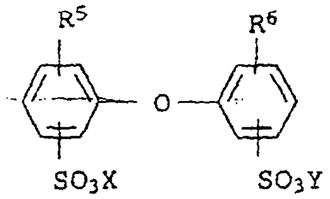

(I)

worin $R^5$ und $R^6$ Wasserstoff oder $C_4$- bis $C_{14}$-Alkyl bedeuten und nicht gleichzeitig Wasserstoff sind, und C und Y Alkalimetallionen und/oder Ammoniumionen sein können. Vorzugsweise bedeuten $R^5$, $R^6$ lineare oder verzweigte Alkylreste mit 6 bis 18 C-Atomen oder Wasserstoff und insbesondere mit 6, 12 und 16 C-Atomen, wobei $R^5$ und $R^6$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen II, in denen X und Y Natrium, $R^5$ ein verzweigter Alkylrest mit 12 C-Atomen und $R^6$ Wasserstoff oder $R^5$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg-Thieme-Verlag, Stuttgart, 1961, Seiten 192 bis 208).

Handelsnamen von Emulgatoren sind z.B. Dowfax®2A1, Emulan® NP 50, Dextrol® OC 50, Emulgator 825, Emulgator 825 S, Emulan® OG, Texapon® NSO, Nekanil® 904 S, Lumiten® I-RA, Lumiten E 3065 etc. eignen sich die erfindungsgemäßen Polymerdispersionen insbesondere als Fußbodenanstrichmittel, vor allem dort, wo eine hohe Beanspruchung der Fußböden durch ständigen Kraftfahrzeugverkehr, z.B. in Parkhäusern, Garagen, z. B. Tiefgaragen,

gegeben ist.

Die Anstrichmittel können in einfacher Weise auf die gewünschten Oberflächen aufgetragen werden. Das Dispersionswasser verflüchtigt sich bei Raumtemperatur oder gegebenenfalls bei erhöhter Temperatur.

Beispiele

I. Herstellung der erfindungsgemäßen Polymerdispersionen

Dispersion 1

Teile sind Gewichtsteile

In einem Witt'schen Topf mit Thermostat, Rührer, Rückflußkühler, diversen gerührten Zulaufgefäßen, Thermometer und Stickstoffanschluß werden 30,6 Teile VE-Wasser vorgelegt, mit Stickstoff gespült und auf T = 85°C aufgeheizt. Dann gibt man 10 Gew.-% restlichen Zulauf I und anschließend 5 Gew.-% des restlichen Zulaufs II zu und polymerisiert die Mischung 15 min. an. Dann fährt man den restlichen Zulauf I und Zulauf II nebeneinander kontinuierlich in 3 Stunden dem Reaktor zu. Man polymerisiert noch 1,5 Stunden bei T = 85°C nach, kühlt ab und stellt den pH-Wert der Polymerdispersion mit verdünnter Natronlauge auf etwa 7 ein.

Als Zulauf I wird in einem gerührten Zulaufgefäß eine Monomerenemulsion, hergestellt aus 14,4 Teilen VE-Wasser, 2,6 Teilen einer 30 %igen wässrigen Lösung des Na-Salzes eines sauren Schwefelsäureesters eines Nonylphenolethoxilats mit ca. 25 Ethylenoxid-Einheiten, 27 Teilen Methylmethacrylat, 9 Teilen Hydroxiethylacrylat und 9 Teilen n-Butylacrylat. Als Zulauf II verwendet man 7,5 Teile einer 3 %igen Lösung von Natriumpersulfat in VE-Wasser. Man erhält eine koagulatfrei 45 %ige Polymerdispersion mit einer Teilchengröße von etwa 220 nm und einer MFT von 30°C.

Zur Herstellung weiterer Polymerdispersionen verfährt man wie oben angegeben.

Die Zusammensetzung der Polymere und der MFT sind in Tabelle 1 angegeben.

Tabelle 1: Zusammensetzung der Polymere in Gew.-% Monomer und MFT

| Polymer-dispersionen | MMA | n-BA | EHA | HEA | HEMA | AMA | GMA | AS | MFT °C |
|---|---|---|---|---|---|---|---|---|---|
| 1 | 60 | 20 | | 20 | | | | | 27 |
| 2 | 44 | 20 | 16 | | 20 | | | | 24 |
| 3 | 44 | | 35 | | 20 | 1 | | | 33 |
| 4 | 55 | 15 | | 20 | | | 10 | | 29 |
| 5. | 60 | | 20 | 20 | | | | | 31 |
| V1 | 54 | | 46 | | | | | | 15 |
| V2 | 44 | | 36 | 20 | | | | | <2 |
| V3 | 48 | | 40,5 | | 10 | | | 1,5 | 20 |
| V4 | 49 | 20 | 21 | 10 | | | | | 10 |

Abkürzungen

V1-V4: Vergleichsbeispiele
MFT: Mindestfilmbildetemperatur
MMA: Methylmehtacrylat
n-Ba: n-Butylacrylat
EHA: 2-Ethylhexylacrylat
HEA: Hydroxyethylacrylat
HEMA: Hydroxyethylmethacrylat
AMA: Allylmethacrylat
GMA: Glycidylmethacrylat
AS: Acrylsäure

II. Anwendungstechnische Prüfung Herstellung der Fußbodenanstrichmittel

Formulierung (Angabe in Gewichtsteilen)

| | |
|---|---|
| Wasser | 45 |
| Pigmentverteiler MD 20 | 10 |
| Parmetol A 23 | 3 |
| Byk 022 | 2 |
| Natronlauge, 20 %ig | 1 |
| Butyldiglykol | 25 |
| Propylenglykolphenylether | 10 |
| Propylenglykol | 25 |
| Collacral PU 75 | 15 |
| Titandioxid Kronos 2190 | 104 |
| Eisenoxidschwarz | 6 |
| Eisenoxidgelb | 12 |
| Talkum AT 1 | 30 |
| Quarzmehl F 500 | 130 |
| Byk 024 | 2 |
| Polymerdispersion (45 Gew.-% fest) | 554.4 |
| Poligen WE 1 | 25 |
| Wasser | 0.6 |
| | 1000 |

Pigmentverteiler MD 20 ist ein Dispergiermittel auf Basis eines Maleinsäure-Diisobuten-Copolymer-Na-Salzes, 25 %ig gelöst in Wasser. Byk 022 und 024 sind Entschäumer. Parmetol A 23 ist ein Konservierungsmittel, Collacral PU 75 ein Diurethan-Verdicker 25 %ig. Poligen WE 1 ist eine Polyethylenwachsdispersion, 30 %ig in Wasser.
Die Bestandteile werden in der angegebenen Reihenfolge zugegeben und mittels Schnellrührer vermischt.

1. Wasseraufnahme

Aus den Polymerdispersionen wurden Filme mit einer Schichtdicke von 0,5 mm (trocken, Trocknungsbedingungen 24 h, 50°C) gegossen. Die Filme wurden in Stücke von einigen $cm^2$ Größe geschnitten. und die Wasseraufnahme nach DIN 53495 bestimmt.

2. Benzinaufnahme

Es wurden Filme wie unter 1. hergestellt. Die Filme wurden in Testbenzin (Siedebereich 185-210, ca. 20 % Aromatenanteil) getaucht und die Gewichtszunahme nach 24 h in Gew.-% gemessen.

3. Blockfestigkeit der Fußbodenbeschichtungen

Die Fußbodenanstrichmittel wurden mit einer Schichtdicke von 100 mu (naß) auf Lenetafolie aufgezogen, dann 4 Tage bei Raumtemperatur getrocknet. Anschließend wurden 5 mal 5 $cm^2$ groß Stücke herausgeschnitten, paarweise mit beschichteter Seite gegen beschichtete Seite aufeinandergelegt und über 16 h bei 60 mit 10 kg belastet. Bewertet wurde die Haftung (Schulnoten: 0 = fallen auseinander, 5 = nicht trennbar).

4. Abrieb der Fußbodenbeschichtungen

Auf 10 $cm^2$ große Glasplatten wurden zweimal je 1,5 g der Fußbodenanstrichmittel aufgestrichen und anschließend 3 Tage bei Raumtemperatur getrocknet. Die Beschichtungen wurden dann in einem Abraser traktiert (Steine CS-10 (fein), Gewicht 500 g, 1000 Cyclen).

| Kennwerte der Dispersionen und Fußbodenanstriche: | | | | |
|---|---|---|---|---|
| Polymerdispersion | Wasseraufnahme in 24 h/% | Benzinaufnahme in % | Blockfestigkeit | Abrieb/mg |
| 1 | 11.1 | 1.2 | 3 | 27 |
| 2 | 10.5 | 6 | 4 | 39 |
| 3 | 12.9 | 8.8 | 1-2 | 33 |
| 4 | 20.5 | 1.6 | 3 | 22 |
| 5 | 14 | 2.4 | 3- | 32 |
| | | | | |
| V1 | 7.4 | * | 3 | 66 |
| V2 | 21.7 | 35 | 4 | 46 |
| V3 | 17.6 | 31.5 | 4 | 46 |
| V4 | 17.6 | 22.4 | 5 | 37 |

*Film angelöst, verklebt beim Abtupfen mit Papiertuch

**Patentansprüche**

**1.** Verwendung einer wässrigen Polymerdispersion, enthaltend ein radikalisch polymerisiertes Polymer, welches eine Mindestfilmbildetemperatur von 15 °C bis 50 °C hat und aus

| | |
|---|---|
| 11 bis 35 Gew.-% | einer copolymerisierbaren ethylenisch ungesättigten Verbindung (Monomer) mit mindestens einer Hydroxylgruppe, |
| 89 bis 50 Gew.-% | sogenannter Hauptmonomere, ausgewählt aus C1-C20-Alkyl(meth)acrylaten, vinylaromatischen Verbindungen mit bis zu 20 C-Atomen, Vinylestern von bis zu 20 C-Atome enthaltenden Carbonsäuren, und |
| 0 bis 30 Gew.-% | weiteren Monomeren aufgebaut ist, |

**dadurch gekennzeichnet, dass** die Polymerdispersion als alleiniges Bindemittel ohne Mitverwendung weiterer Harze, ohne Zusatz von Vernetzern oder vernetzenden Harzen verwendet wird, für Anstrichmittel.

**2.** Verwendung der wässrigen Polymerdispersion gemäß Anspruch 1 als Bindemittel für ölresistente, abriebfeste Fußbodenanstrichmittel.

**3.** Verwendung gemäß Anspruch 2, wobei es sich um Fußbodenanstrichmittel für Garagen oder Parkhäuser handelt.

**4.** Verwendung gemäß einem der Ansprüche 1 bis 3, wobei es ich um Anstrichmittel für bitumöse oder mineralische Oberflächen, insbesondere Asphalt, Beton oder Estrich handelt.

**5.** Anstrichmittel, enthaltend eine wässrige Polymerdispersion enthaltend ein radikalisch polymerisiertes Polymer, welches eine Mindestfilmbildetemperatur von 15 °C bis 50 °C hat und aus

| | |
|---|---|
| 11 bis 35 Gew.-% | einer copolymerisierbaren ethylenisch ungesättigten Verbindung (Monomer) mit mindestens einer Hydroxylgruppe, |
| 89 bis 50 Gew.-% | sogenannter Hauptmonomere, ausgewählt aus C1-C20-Alkyl(meth)acrylaten, vinylaromatischen Verbindungen mit bis zu 20 C-Atomen, Vinylestern von bis zu 20 C-Atome enthaltenden Carbonsäuren, und |
| 0 bis 30 Gew.-% | weiteren Monomeren aufgebaut ist, |

**dadurch gekennzeichnet, dass** die Polymerdispersion als alleiniges Bindemittel ohne Mitverwendung weiterer Harze, ohne Zusatz von Vernetzern oder vernetzenden Harzen verwendet wird.

## Claims

1. The use of an aqueous polymer dispersion comprising a free-radically polymerized polymer which has a minimum film-forming temperature of 15 - 50°C and is composed of

| | |
|---|---|
| 11 - 35% by weight | of a copolymerizable, ethylenically unsaturated compound (monomer) having at least one hydroxyl group, |
| 89 - 50% by weight | of principal monomers selected from $C_1$-$C_{20}$-alkyl (meth)acrylates, aromatic vinyl compounds having up to 20 carbon atoms and vinyl esters of carboxylic acids which comprise up to 20 carbon atoms, and |
| 0 - 30% by weight | of other monomers, |

wherein the polymer dispersion is used as the sole binder, without the use of other resins, and without the addition of crosslinking agents or crosslinking resins, for coating compositions.

2. The use of an aqueous polymer dispersion according to claim 1 as a binder for oil- and abrasion-resistant floor coating compositions.

3. The use as claimed in claim 2, wherein the floor coating compositions are for covered singlestory or multistory carparks.

4. The use as claimed in any one of claims 1 to 3, wherein the coating compositions are for bituminous or mineral surfaces, especially those of asphalt, concrete or screeding.

5. A coating composition comprising an aqueous polymer dispersion comprising a free-radically polymerized polymer which has a minimum film-forming temperature of 15 - 50°C and is composed of

| | |
|---|---|
| 11 - 35% by weight | of a copolymerizable, ethylenically unsaturated compound (monomer) having at least one hydroxyl group, |
| 89 - 50% by weight | of principal monomers selected from $C_1$-$C_{20}$-alkyl (meth)acrylates, aromatic vinyl compounds having up to 20 carbon atoms and vinyl esters of carboxylic acids which comprise up to 20 carbon atoms, and |
| 0 - 30% by weight | of other monomers, |

wherein the polymer dispersion is used as the sole binder, without the use of other resins, and without the addition of crosslinking agents or crosslinking resins.

## Revendications

1. Utilisation d'une dispersion aqueuse de polymère contenant un polymère polymérisé par voie radicalaire, qui a une température minimale de formation de film de 15°C à 50°C et est constitué de

| | |
|---|---|
| 11 à 35 % en poids | d'un composé (monomère) copolymérisable à insaturation éthylénique, comportant au moins un groupe hydroxy, |
| 89 à 50 % en poids | de monomères dits principaux, choisis parmi des (méth)-acrylates d'alkyle en $C_1$-$C_{20}$, des composés vinylaromatiques ayant jusqu'à 20 atomes de carbone, des esters vinyliques d'acides carboxyliques comportant jusqu'à 20 atomes de carbone, et |
| 0 à 30 % en poids | d'autres monomères, |

**caractérisée en ce que** la dispersion de polymère est utilisée comme seul liant, sans utilisation simultanée d'autres résines, sans addition d'agents de réticulation ni de résines qui réticulent, pour des produits d'enduction.

2. Utilisation de la dispersion aqueuse de polymère selon la revendication 1, en tant que liant pour des produits

d'enduction de sol résistants à l'huile, résistants à l'abrasion.

**3.** Utilisation selon la revendication 2, dans laquelle il s'agit de produits d'enduction de sol pour garages ou parkings à étages.

**4.** Utilisation selon l'une quelconque des revendications 1 à 3, dans laquelle il s'agit de produits d'enduction pour surfaces bitumineuses ou minérales, en particulier asphalte, béton ou chape en ciment.

**5.** Produit d'enduction, contenant une dispersion aqueuse de polymère contenant un polymère polymérisé par voie radicalaire, qui a une température minimale de formation de film de 15°C à 50°C et est constitué de

| | |
|---|---|
| 11 à 35 % en poids | d'un composé (monomère) copolymérisable à insaturation éthylénique, comportant au moins un groupe hydroxy, |
| 89 à 50 % en poids | de monomères dits principaux, choisis parmi des (méth)acrylates d'alkyle en $C_1$-$C_{20}$, des composés vinylaromatiques ayant jusqu'à 20 atomes de carbone, des esters vinyliques d'acides carboxyliques comportant jusqu'à 20 atomes de carbone, et |
| 0 à 30 % en poids | d'autres monomères, |

**caractérisé en ce que** la dispersion de polymère est utilisée comme seul liant, sans utilisation simultanée d'autres résines, sans addition d'agents de réticulation ni de résines qui réticulent.